# EUROPEAN PATENT SPECIFICATION

(11) **EP 4 521 235 B1**
(45) Date of publication and mention of the grant of the patent: **21.01.2026**
(21) Application number: 23196273.9
(22) Date of filing: 08.09.2023
(51) Int. Cl.: G06F 8/65, G06F 8/71

(54) **METHODS AND SYSTEMS FOR MAINFRAME DOWNTIME REDUCTION**
VERFAHREN UND SYSTEME ZUR REDUZIERUNG DER AUSFALLZEIT EINES GROSSRECHNERS
PROCÉDÉS ET SYSTÈMES DE RÉDUCTION DE TEMPS D'ARRÊT D'ORDINATEUR CENTRAL

(43) Date of publication of application: 12.03.2025
(73) Proprietor: Barclays Execution Services Limited, London E14 5HP (GB)
(72) Inventor: THAKUR, Aniruddha, 411014 Pune (IN); DESHPANDE, Hrishikesh, 411014 Pune (IN)
(74) Representative: Carpmaels & Ransford LLP

(56) References cited:
- WO-A1-2014/125283
- US-A- 6 154 878
- EBBERS ET AL: "Introduction to the New Mainframe: z/OS Basics", 31 March 2011 (2011-03-31), XP093135099, Retrieved from the Internet <URL:https://www.redbooks.ibm.com/redbooks/pdfs/sg246366.pdf> [retrieved on 20240226]

## Description

### Technical Field

The present disclosure pertains downtime reduction in mainframe systems.

### Background

Ebbers ET AL: "Introduction to the New Mainframe: z/OS Basics", 31 March 2011 (2011-03-31), Retrieved from the Internet: URL:https:// www.redbooks.ibm.com/redbooks/pdfs/sg246366.pdf [retrieved on 2024-02-26] discusses IBM's z/OS operating system.

WO 2014/125283 A1 discusses a method of updating software in a computer system, the computer system including virtualisation software arranged to provide a virtualisation environment for running a plurality of virtual machines, wherein each virtual machine is arranged to run a respective software module for providing a respective set of software services. A software update relating to a first software module running in a first virtual machine is received. The first software module is stored on a first storage entity associated with the first virtual machine. A copy of the first storage entity is updated in accordance with the received software update to produce a second storage entity containing an updated version of the first software module. A second virtual machine is then created within the virtualisation environment. The second virtual machine is associated with the second storage entity and arranged to run the updated version of the software module from the second storage entity. The updating step is performed by an update module running outside the first virtual machine. The first virtual machine remains operational to provide software services during the updating step.

US 6154878 A discusses a system for changing a software library during the execution of a software application using the software library. The software application interfaces to the software library only through the use of an interface library, to ensure that the software application does not directly bind with the software library. With no direct binding the software library can be updated during runtime without the software application re-resolving the location of the software library. The update is triggered by a change of the version number in a registry. The program correctness is maintained by library management services ensuring that the software library is no longer in use by the application before updating to the new library. Memory management services are used to ensure that the state of the library is maintained between the old and the updated versions of the software library. Mainframe systems are commonly utilised across several sectors, such as healthcare and telecoms, to run mission-critical applications which require large quantities of data. For example, mainframe systems are used to process resource transactions in real-time, referred to as On-Line Transaction Processing (OLTP). In another example, mainframe systems are used for batch processing. Among other reasons, mainframe systems are utilised for these mission-critical applications because they provide a processing style which revolves around availability. Mainframe systems are designed to minimise system downtime through both hardware and software solutions, resulting in typical unplanned mainframe system downtime of less than 10 minutes per year.

Using a mainframe system, a plurality of applications (e.g. different applications) can be implemented. For an application, there exists an environment library, and each environment library supports the execution of at least one application. These environment libraries are utilised to simplify application management and deployment. An environment library may be a load library and may comprise the software elements, such as compiled code, and supporting data required to execute an application on a mainframe system.

To maintain a mainframe system and deploy both new applications and new versions of existing applications, it is necessary to update the mainframe system on a periodic basis. In particular, it is necessary to update the environment libraries of a mainframe system on a periodic basis. Due to at least the need to update environment libraries during mainframe system updates, the mainframe systems must be taken offline to perform these updates because each environment library being updated provides data essential to run an application. The resulting downtime for updates to mainframe systems can be in the order of days, far exceeding the typical unplanned downtime.

There have been attempts to reduce the amount of downtime when performing updates. For example, US patent publication US 2015/0161182 A1 suggests a method for updating database schema in one atomic step by providing a backwards compatible updated database schema for use by existing application sessions. However, this does not alleviate the downtime for environment library updates, because environment libraries cannot be updated in a single atomic step while allowing existing application sessions to keep running. As discussed above, environment libraries support the execution of an application, so updating an environment library with application sessions running which utilise this library is not possible.

Consequently, a significant need exists for improved mainframe systems and methods of updating mainframe systems to minimise mainframe system downtime during mainframe system updates.

### Summary

The present invention is defined by the independent claims, with further optional features being defined by the dependent claims.

In a first aspect of the invention, there is provided a computer-implemented method for handling mainframe system downtime according to claim 1.

In this way, downtime during a mainframe system update is reduced to two short windows of downtime: when the ephemeral environment library is made active and when the updated default library is made active. In between these two windows of downtime, the method allows the mainframe to be used as though no update has begun. Therefore, by setting an ephemeral version of an environment library to active before and while a default version of the environment library is updated, the invention reduces mainframe system downtime.

In some embodiments, the default version of the environment library comprises a first precompiled set of commands that is configured to support the execution of one or more applications prior to the default version of the environment library being updated, and in further embodiments the ephemeral version of the environment library comprises the first precompiled set of commands that is configured to support the execution of one or more applications. In certain embodiments updating the default version of the environment library comprises generating a second precompiled set of commands, wherein the updated default version of the environment library comprises the second precompiled set of commands that is configured to support execution of one or more applications. In further embodiments, supporting the execution of one or more applications comprises accessing data stored in one or more databases. In certain embodiments, the first precompiled set of commands comprises load modules, DB2 packages and IMS blocks. Additionally, in some embodiments, the first precompiled set of commands further comprises one or more of: refence data updates, IMS database structure, DB2 plans, DB2 structure, DB2 timestamps, and/or IMS control build. These embodiments provide a framework to allow a precompiled set of commands within an environment library to be efficiently exchanged only when necessary, allowing for a system update while both minimising complexity and maximising system uptime. For example, by using the first precompiled set of commands in the ephemeral version of the environment library, the same commands previously supporting the execution of applications continue to be used while the default version of the environment library is updated. Therefore, there is minimal risk of failure (and minimal chance of further disruption) as no changes are made to the components of the environment library supporting the function of one or more applications when the ephemeral version of the environment library is set to active. Similarly, the creation and interchanging of the first precompiled set of commands with the second precompiled set of commands allows for the default version of the environment library to be updated. The manipulations of precompiled sets of commands provide a computationally efficient way of updating an environment library while allowing for uptime to be maximised.

The first aspect of the invention further comprises a first mainframe system downtime period and a second mainframe system downtime period as defined in claim 1.

In this way, the mainframe system may still be brought down as is necessary to change the versions of the environment library to active or offline and perform any other tasks which can either only be performed during downtime or are safer (such as from a data integrity perspective) to perform during downtime. However, by having multiple downtime periods which are initiated only when needed and end as soon as they are no longer required, mainframe system downtime can be reduced only to the times where it is necessary, thereby maximising system uptime while retaining the benefits of updating an environment library. Such benefits include data integrity/safety, user familiarity, and/or interoperability of the method with other upgrade processes/different mainframe systems without extensive changes to software and/or hardware.

In some embodiments, the default and ephemeral versions of the environment library are switched between being set to active or default by a REXX script. In this way, a single script can be run in order to use the method on a mainframe system. Using a single control script simplifies the update and input process for users initiating an update of an environment library and improves the reliability of the method. In further embodiments, the method comprises renaming, using the REXX script, the versions of the environment library. Additionally or alternatively, the REXX script points batch and online transaction (OLTP) processes to the version of the environment library which is being set to active. In these ways, the script may change the version of the environment library which is active automatically and without significant data modification. Therefore, the use of the REXX script to rename the environment library versions in this embodiment reduces the risks of incompletely setting an environment library to active. Furthermore, using the REXX script in either of these embodiments will increase the rate at which the active environment library can be changed, therefore decreasing the any period of mainframe system downtime associated with a change of the active version of an environment library.

In some embodiments, the method further comprises making a database copy each time the version of the environment library which is set to active is changed. In this way, should any stored data be corrupted or otherwise compromised, the data can be restored from a recent backup. By making these backups when the version of the environment library which is set to active is changed, data can be restored before or immediately after a period of mainframe system downtime associated with the change of active environment library, thereby avoiding the loss of any data acquired outside of mainframe system downtime. In addition, making backup copies during periods of mainframe system downtime mitigates any potential impact on the processing of regular batch and OLTP scheme processes which would occur of the mainframe system were up. Cumulatively, the copies generated by this step act as contingencies to mitigate the risk of data loss and to minimise mainframe system downtime which may be associated with unforeseen data loss.

In some embodiments, updating the default version of the environment library comprises adding, deleting and/or upgrading one or more of: one or more load modules of the default version of the environment library, one or more Db2 packages of the default version of the environment library, and/or reference data included in the default version of the environment library. As such, the method may be used to add, remove, delete, modify or otherwise upgrade all the elements that form an environment library when updating the default version of the environment library. In further embodiments, updating the default version of the environment library comprises one or more of: batch set up, re-baselining libraries, applying IMS (Information Management System) blocks, applying Db2 structural changes, applying Db2 plan, packages and timestamps, and/or applying IMS database structural changes and control build. Therefore, any changes which improve environment library stability, functionality, efficiency or any other desired environment library trait can be instituted by the invention. In this way, the method can be utilised to apply all necessary updates to the environment library, thereby minimising both system downtime and disruption to system functionality by updating as many software elements of the mainframe system as possible.

In another aspect of the invention, there is provided a computer program product comprising instructions which, when executed by a mainframe system, cause the mainframe system to perform any method of the invention.

In another aspect of the invention, there is provided a (non-transitory) computer readable medium comprising instructions which, when executed by a mainframe system, cause the mainframe system to perform any method of the invention.

In another aspect of the invention, there is provided a mainframe system, the mainframe system comprising at least one processor, wherein the at least one processor is configured to perform any method of the invention.

### Brief Description of the Drawings

Embodiments of the invention are described below, by way of example, with reference to the following drawings, in which:
Figure 1 is a schematic of an exemplary system for implementing a method of the invention.
Figure 2a is a schematic of an exemplary set of devices and connections which may form a system, such as the system of Figure 1, for implementing a method of the invention.
Figure 2b is a schematic of an exemplary storage device of the set of devices in Figure 2a.
Figure 3 is a schematic of an exemplary logical partition division in a system for implementing a method of the invention such as the system of Figure 1.
Figure 4 is a flow diagram of a first method of reducing mainframe system downtime according to the invention.
Figure 5 is a flow diagram of a second method of reducing mainframe system downtime according to the invention.

### Detailed Description

### Mainframe Systems

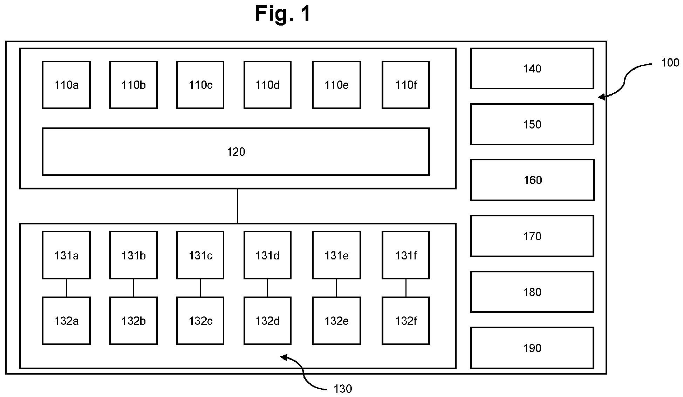

Figure 1 is a schematic illustrating an exemplary system 100 for implementing a method of the invention. Generally, system 100 is a mainframe system. A mainframe system is a computational system configured to intake and process a higher volume of simultaneous requests than most other server systems. The hardware and software of these mainframe systems are configured to optimise system security, backwards-compatibility, scalability and availability. Mainframe systems are often configured to modify and maintain datasets and databases. The use of a mainframe is typically as a hub within a centralised computing network.

Due to the nature of mainframe systems, users of mainframe systems can be broadly divided into two categories. First, the category herein referred to as control users, are typically mainframe system administrators. Generally, these control users have privileges (such as username and password credentials), access to the mainframe system, and/or access to mainframe system input terminals which allow the control users to configure and/or modify the hardware and/or software of the mainframe system. The second category, herein referred to as end users, interact with applications running on the mainframe system. In some cases, these end users provide data to the mainframe system for processing via an application running on the mainframe system. Typically, the end users will receive an output of an application running on the mainframe system. Generally, end users will be physically remote from the mainframe system, and will provide and receive data from the mainframe system via a secondary device. The secondary device may include a mobile device such as a phone or a tablet, a computer, a pager, an ATM, a television and/or any other device capable of receiving and/or transmitting data. In some cases, end users will not directly interact with the mainframe system or applications. Instead end users may interact with a secondary application running on the secondary device, which may transmit to and/or receive data from any number of other tertiary systems and/or devices (wherein each tertiary system or device may be running tertiary applications), to transmit and receive data from the mainframe system. In many cases, the tertiary systems and/or devices are servers which may be part of the same centralised computing network as the mainframe system.

As shown in Figure 1, system 100 comprises main storage 120, an Input and Output (I/O) subsystem 130 and at least one processor 110a-f, such as two or more processors. For example, Figure 1 shows six processors 110a-f but this number is illustrative, and any integer number of processors may be included in system 100. In addition, system 100 may comprise: a component cooling system 140, at least one Power Supply Unit (PSU) 170, at least one support interface subsystem 160, at least one battery 180, at least one hardware control subsystem 190, and one or more supplementary storage devices 150. System 100 may be housed in a single frame or multiple frames. In some cases, the at least one support interface subsystem 160 may comprise a self-contained computer system with user input and display capabilities, communicatively coupled with other components of system 100 and configured to allow control users to control and maintain system 100. For example, the at least one support interface subsystem 160 may comprise a laptop or laptop-format computer system, wherein the laptop may be mechanically and electrically coupled to system 100.

One or more of the at least one processors 110a-f may form part of a Single Chip Module (SCM). One or more of the at least one processors 110a-f may be an IBM z/Architecture processor. At least one processor 110a-f may be characterised for a specific purpose within system 100. Each processor may be assigned one of a plurality of characterisations, including as: a Central Processor (CP), which is used to process normal operating system and/or application workloads; a System Assistance Processor, which is used in the operation of an I/O subsystem 130; or a spare processor, which is a redundant processor for system 100 and may be characterised as any other processor characterisation automatically or manually to replace another processor in response to predicted failure or unpredicted failure of the other processor. In addition, a plurality of alternative or additional processor characterisations may be possible, these may include at least the following characterisations: CP Assist for Cryptographic Function (CPACF), Integrated Facility for Linux (IFL), Integrated Coupling Facility (ICF), IBM System z Application Assist Processor (zAAP), and/or IBM System z Integrated Information Processor (zIIP).

The main memory of system 100 may be any form of transient computer storage medium. For example, the main memory 120 may comprise any form of Random Access Memory (RAM), for instance: Static Random Access Memory (SRAM), Dynamic Random Access Memory (DRAM), and/or Synchronous Dynamic Random Access Memory (SDRAM). A portion of the main memory 120 may be control user replaceable. The main memory 120 and the at least one processor 110a-f may be connected by a system bus. The main memory 120 may be configured to store at least the data necessary for applications and/or operating systems to run on system 100 and the data being processed by system 100 at a given instant.

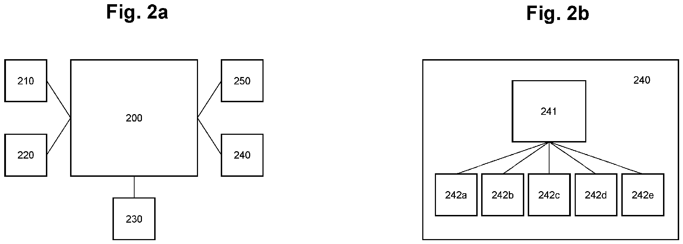

The I/O subsystem 130 is configured to connect the at least one processor 110a-f and the main memory 120 to external devices and users. Figure 2a shows system 200, which may correspond to system 100, connected to a variety of external networks and devices, as discussed further herein. The I/O subsystem may comprise a plurality of hardware channels 131a-f which connect the main memory 120 and/or one or more of the at least one processors 110a-f to an I/O device. The hardware channels may be organised into hardware channel subsystems comprising a fixed number of hardware channels 131a-f, these hardware channel subsystems may allow for communication between an I/O device and the main memory 120. A hardware channel may comprise an I/O card 132a-f to provide ports which can connect to a hardware channel cable connected to an external I/O device. I/O cards 132a-f allow a system to be configured according to the external connectivity needs of the system. A hardware channel 131a-f may connect to the I/O card via a Peripheral Component Interconnect Express (PCle) interface, generally this interface will be PCIe generation 3 or generation 4. For example, an I/O card 132a-f may provide ports with optical fibre connection capabilities to connect to, for example, storage 240 and/or print 230 I/O devices. Additionally or alternatively, an I/O card 132a-f may comprise one or more ports configured to allow for Local Area Network (LAN) 210, Wide Area Network (WAN) 220 and/or internet (such as via an internet service provider) connections, such ports may accept RJ-45 standard connectors. This network connectivity allows system 200 to transmit data to and receive data from control users, end users, systems, and devices. Each I/O card 132a-f may comprise an I/O card processor and I/O card storage. Also, a hardware channel 131a-f may connect to a hardware management console (HMC) 250. HMC 250, may be a self-contained computer system able to receive data from and transmit data to system 200. Additionally, HMC 250 may be configured to allow a control user to control and configure the hardware and software related to system 200.

In order for system 200 to control and communicate with an I/O device, a device controller is used. The device controller is configured to operate an I/O device and may operate/control more than one I/O devices. Alternatively, a different device controller may be required for each I/O device. As an example, a device controller may be configured to control a tape library storage I/O device (discussed in more detail below). The device controller may be integral to system 200 or an I/O device, such as storage device 240. Alternatively, a device controller may be located physically separate from either the system 200 or an I/O device, and may be communicatively coupled to both system 100 and any I/O device which the device controller is configured to control.

The system 200 may be connected to at least one I/O storage device 240 to supplement the main memory of the system 200 and provide non-transient data storage in for data relevant to the system. Each I/O storage device may be contained within an I/O storage device frame separate to the frame of system 200, and each I/O storage device may comprise one or more device controllers 241 and at least one storage element 242a-e for storing data. The at least one device controller may be configured to control the function of the I/O storage device as discussed above. The at least one storage element 242a-e may be a direct access storage device (DASD). For example, storage elements 242a-e may comprise flash cards, flash drives or disk drives. More generally, a storage element may comprise semiconductor or solid-state memory, a removable computer diskette, a random-access memory (RAM), a read-only memory (ROM), a rigid magnetic disk and/or an optical disk. Alternatively, the I/O storage device may be a tape library, wherein the storage elements 242a-e are tapes, magnetic or otherwise, and the I/O storage device further comprises a tape reader and tape writer. The tape storage elements may be configured to store data for archival or backup purposes, while DASD storage elements may be configured to store data which is regularly or actively required by system 200. For example, when not being executed by a processor, operating system data and application data may be stored on DASD storage elements.

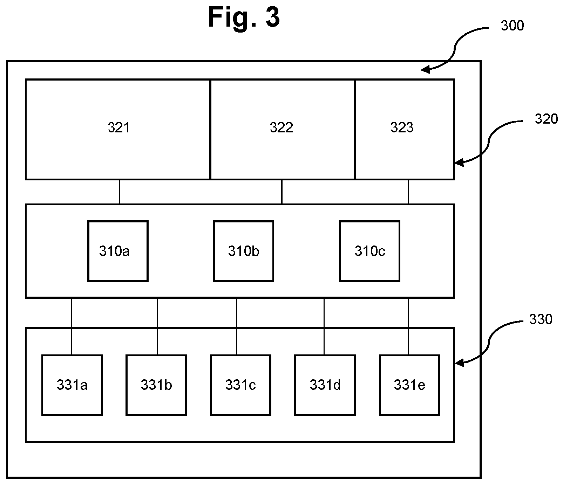

Referring to Figure 3, system 300 corresponds to system 100 and/or system 200 discussed herein. Generally, computational hardware resources of system 300 will be partitioned into two or more logical partitions 321-323. However, in some cases system 300 may only have one logical partition 321. The computational hardware resources of system 300 which may be partitioned include may include, main memory 320, one or more processors 310a-c and/or one or more hardware channels 310a-e of I/O subsystem 310. Each logical partition is allocated a portion of the main memory 320 of system 300 and may run an operating system. The operating system used by each logical partition 321 of system 300 may be the same or different as other logical partitions 322-323 of system 300. Operating systems which may run on a logical partition 321-323 include: Linux, Unix, Windows, z/OS, VM, VSE or any other commercially available operating system. For example, two or more of the two or more logical partitions 321-323 may run different operating systems to utilise the different functionality of each operating system. Alternatively, two or more of the two or more logical partitions 321-323 may run the same operating system to allow for isolated production and testing areas on the same system. One or more processors 310a-310c may be dedicated to a single logical partition 321 or may be shared between multiple logical partitions 321-323. A hardware channel 331a of a plurality of hardware channels 331a-e of I/O subsystem 330 may be dedicated to a single logical partition 321 or may be shared between multiple logical partitions 321-323. In addition, the portion of the main memory 320, the one or more processors 310a-c and the plurality of hardware channels 331a-e allocated to a logical partition 321 may be reconfigured and reallocated between logical partitions 321-323 without requiring any logical partition in system 300 to be taken offline or powered off.

Returning to Figure 1, system 100 may be configured to read, write, maintain and/or execute changes to one or more databases. The one or more databases may be relational databases. For example, at least one of the one or more databases may be an IBM Db2 database. Additionally, one or more of the one of the one or more databases may be an IBM Information Management System database (an IMS database). The one or more databases may be interacted with via database management (DBMS) software, for example, IBM Db2 DBMS software. In this context, interacting with a database may comprise reading data from a database, writing data to a database or otherwise changing a database. The DBMS software may be executed and utilised by any logical partition of system 100, however the DBMS software may vary depending on the operating system executed on the logical partition. If the database is relational, it may be interacted with using Structured Query Language (SQL). A Db2 database, which is compatible with IBM Db2 DBMS software, is an example of a relational database.

System 100 may further be configured to execute applications. The applications may be executed on any logical partition of system 100. For example, the applications may be written in a programming language such as Java, Python, PHP, Ruby, C, C++, COBOL Fortran and/or REXX. The applications may be configured to interact with a database using SQL statements which may be embedded in the applications, this interaction using SQL statements may require DBMS software. Generally, these applications will be written in COBOL. Alternatively, these applications may be written in C, C++, Fortran and/or REXX. Additionally or alternatively, a DBMS software interface or REST API may be utilised by the applications to interact with a database.

DBMS software may utilise, read, and/or execute packages comprising a set of compiled query language statements. Each set of compiled query language statements may be derived from SQL statements. For example, each set of compiled query language statements may be a functional control structure equivalent to one or more SQL statements. For an application to run and interact with a database using DBMS software, the sets of compiled query language statements equivalent to the SQL statements in the application may need to be ordered in an application plan according to the application, such that the DBMS software can execute the functional meaning of the SQL statements in the application. If the DBMS software used is IBM's DB2 DBMS software, the sets of compiled query language statements are DB2 packages.

An application may be run in an environment. The environment may be shared by one or more applications. The environment may designate the system hardware and software relevant to the execution of the application, however, more commonly the environment will be a virtualised environment allowing the system hardware allocated to the environment to be changed while the application is executed. In some cases, DBMS software may allow more than one version of a set of compiled query language statements to coexist. For example, the DBMS software may be Version 12 or later of IBM's Db2 DBMS software and each set of compiled query language statements may be embodied as a Db2 package. If multiple versions of the same set of compiled query language statements are allowed, multiple versions of a library (such as an environment library), comprising different versions of the same set of compiled query language statements, may co-exist. Up to one of the library versions may be active at any time.

To support the execution of one or more applications an environment library may be required. In some cases, each logical partition will have one environment library. An environment library serves to provide all the necessary information, functions, libraries and services which an application may require for execution. For example, an environment library may comprise, variables, date/time services, functions/modules and libraries relevant to the programming language of the application, mathematical services/functions and functions/libraries relevant for interaction with or use of other software with an application, such as DBMS software.

An environment library may be a load library, wherein the environment library comprises compiled code and elements supporting execution of that code. For example, an environment library may comprise modules for applications, some of which may be common modules or application specific modules, one or more set of compiled query language statements for DBMS software such as DB2 packages, which may relate to applications run using the environment library, and/or a plurality of additional software elements such as software elements to support the function of databases, like IMS databases. Additionally or alternatively, an environment library may comprise one or more of: compiled versions of application code, DBMS application plans, and/or SQL statements. More specifically, an environment library may comprise one or more of any of the following: load modules, DB2 packages and plans, reference data for one or more application and reference data updates, IMS database structure, DB2 database structure, IMS blocks, DB2 timestamps, and/or IMS control build.

In order to initiate and run an application on system 100, a control user may need to provide a control instruction set to system 100 indicating the application, what part of an application is to be executed and one or more of: a compiler and instructions for compiling source code, the type and memory location of input data required by the application, the type and memory location of libraries required by the application and the type and target memory location for output data being produced by the application. The control instruction set may be embodied in job control language (JCL) or any other suitable programming language. The control instruction set may indicate more than one application, the sequence in which to execute these applications and the interrelation between the inputs and outputs of the applications. The control instruction set may be interpreted by control instruction interpreter software of system 100. If the control instruction set is written in JCL, the control instruction interpreter software may be a job entry subsystem (JES). In some embodiments, an operating system may comprise control instruction interpreter software.

To interact with and control operating systems running on a logical partition of system 100, a time-sharing environment may be required. A time-sharing environment is a command interface which allows multiple control users to access system 100 simultaneously. If the operating system used on a logical partition of system 100 is an IBM operating system, such as z/OS, the time-sharing environment may be Time Sharing Option (TSO) and/or Time Sharing Option/Extensions (TSO/E). In this case, IBM's Interactive System Productivity Facility (ISPF) software may be used by a control user to interface with TSO and/or TSO/E. Commands relevant to ISPF may be given by a control user via the ISPF interface or may be embedded in a script written in REXX programming language or any other suitable programming language. The time-sharing environment may respond to commands from control users to configure an operating system and software associated with the operating system. For example, time sharing environment commands may be configured to create, edit, rename, and/or delete libraries. Additionally or alternatively, time sharing environment commands may be configured to: list, print, copy, delete, allocate and/or rename a dataset; compile programs; link-edit and test compiled programs; view program outputs and/or allocate program outputs to a printer; submit and/or view/allocate the program outputs; monitor and/or cancel processing according to control instruction sets. Multiple time-sharing environment commands may be comprised in a list. Time-sharing environment commands may be embedded in a script written in REXX programming language or any other suitable programming language. TSO and ISPF commands may be used to invoke, set-up and submit batch scheme tasks for processing based upon skeleton control instruction sets. Skeleton control instruction sets may be written in JCL. The skeleton control instruction sets may comprise incomplete control instruction sets which require one or more variables to be specified before they can be submitted for processing. A REXX script may be utilised to accept control user input and/or otherwise determine the value of variables which can be used to complete and invoke one or more skeleton control instruction sets. The REXX script may then submit the completed skeleton control instruction sets for processing. In general REXX scripts may be utilised to automate many system processes, for example changing the names of libraries, including the names of environment libraries.

Mainframes systems are typically configured to process data (by executing applications) to complete tasks in two processing schemes, though other schemes are possible. The first scheme is online transaction processing (OLTP). OLTP refers to a scheme of processing which involves a plurality of indivisible interactions between the mainframe system and a plurality of end users, where each interaction is not computationally intense but requires approximately instantaneous processing and response. For example, in an OLTP interaction an application may be configured to interact with DBMS software running on the mainframe system 100 using any of the methods described herein to access a database in order to read, write or amend a database entry. The DBMS software may be Db2 software and the database may be a Db2 database which may be stored on non-transient memory of an I/O device 240 connected to the mainframe system. In order to connect to an end user, OLTP processing schemes may require transaction manager software, such as IBM's Information Management System Transaction Manager (IMS TM). The transaction manager software may be executed by system 100. The transaction manager software may be configured to access one or more databases, such as a DB2 database or an IMS database. The transaction manager software controls an entire OLTP process. For example, first a transaction manager software may facilitate interaction with an end user to transmit a transaction to system 100. Typically, end user interaction will utilise a network, such as networks 210 and 220, to permit data transfer between system 100 and a terminal used by the end user. The transaction manager software will then process the transaction. This processing of a transaction may involve communication with an application configured to process data in the manner required by the transaction. The transaction manager software may be configured to access the data stored in an environment library in order to execute the application. Processing of an application may involve modifying, deleting or adding one or more entries to one or more database. Then the transaction management software may confirm that the transaction has been processed correctly. The transaction manager software may order incoming transactions in a queue until processors 110a-f of system 100 have the availability to process the first received transaction in the queue. The queue of transactions may be stored in main memory 120.

The second processing scheme is batch processing. Batch processing typically refers to a processing scheme where a large quantity of data is processed by the mainframe system, and where the processing may require multiple steps. In contrast to OLTP, batch processing does not require constant connection to end users and does not actively receive transactions while the batch process executes, but typically processes a higher quantity of data in a more complex series of processing steps. A batch process may require multiple applications to be run in a sequence. Batch processes may be defined by a control instruction set. Similar to an OTLP scheme, in a batch process one or more applications may be configured to interact with DBMS software running on the mainframe system using any of the methods described herein to access a database in order to read, write and/or amend multiple database entries. Batch processes can be run based upon system availability, for example if end user numbers decrease overnight, batch processes may be run on system 100 at night.

In some aspects, software elements stored on memory accessible by system 100, such as main storage 120, can be active or offline. For example, a library, such as an environment library, may be a software element which can be offline or active. If a software element is offline, it is not accessed to facilitate the function of or run an application on system 100. For example, an environment library which is offline will not facilitate the function of an application used in batch processing scheme tasks or by transaction manager software in OLTP processing scheme tasks. Conversely, if a software element is active, it is accessed to facilitate the function of or run an application on system 100. As offline software elements are not used in processing tasks by system 100, these offline software elements may be modified, removed and/or exchanged without affecting processing tasks presently undertaken by the system 100 until these software elements are set to active. If the software element is a library, such as an environment library, that library may be called by applications when they are executed. Applications whose execution is supported by an environment library may call an active name to access the environment library, therefore in this case, for an environment library to be active, the environment library must be named the active name, but only one version of an environment library may be active at one time as a result.

A software element will be active if it is called, executed, accessed and/or otherwise used by system 100 when processing a task according to a processing scheme, where the processing scheme may be one of the processing schemes discussed herein. Otherwise, a software element will be considered offline. For example, in the case of batch scheme processing, if the software element is a library, it may be offline if the library is not pointed to in the instruction control set for the batch process. Alternatively, in the case of OLTP scheme processing, if the software element is a library, it may be offline if the transactions are not directed to the library by transaction management software.

In order for updated software features to be implemented on a system, such as system 100, the system may need to be taken down for an update. When a system 100 is taken down it is not able to process tasks on any of the processing schemes mentioned herein, particularly OLTP processing schemes. In some cases when a system 100 is taken down, tasks associated with batch processing schemes are delayed, paused or cancelled. The modification of environment libraries for updates and/or the setting of versions of environment libraries to active or offline may be embodied as one or more batch scheme processes. However, typically when a system 100 is taken down, it will not modify databases or otherwise process data. In other cases, when a system is taken down it may be turned off, power cycled, and/or restarted. When a system is taken down, the period of time when the system is down is referred to herein as downtime.

Outside of periods of system downtime, the system is considered to be up or in a period of uptime. At the end of a period of system downtime the act of transitioning from downtime to uptime may be referred to as bringing the system up or online. During system uptime the system is able to process tasks on any of the processing schemes mentioned herein, particularly OLTP processing schemes.

The updated software features may require one or more of modifying an application, modifying libraries, and/or modifying an operating system. Additionally or alternatively, to modify the hardware in system 100 and/or to perform preventative maintenance system downtime may also be required. During system downtime, updates might be applied to one or more of the following: applications (such as application load modules in environment libraries), database structure (including the structure of IMS and DB2 databases), DBMS software, DBMS packages/sets of compiled query language statements, DBMS plans, control instruction sets, IMS blocks, IMS control build and/or DBMS timestamps. In addition to allowing updates to be made to applications executed on the system, updates resulting in system downtime may enable new features (such as machine learning operability), improved and/or optimised processing capacity, improved system security and/or increased reliability.

### Mainframe System Downtime

System downtime is required for many updates to mainframe system software. Typically, OLTP and batch scheme processing cannot occur while modifications, deletions and/or additions are being made to the applications, libraries, transaction manager software, DBMS software, and/or operating systems used in the completion of a processing scheme. In the case of environment libraries which support the function of applications, typically any process requiring one or more application supported by the environment library cannot continue while modifications, deletions and/or additions are made to the relevant environment library. Due to the reliance of applications on the environment library of a logical partition, typically all OLTP processes and all batch processes (which are not related to the modification of the environment library) must stop while an environment library is updated. The result is periodic planned downtime in which the system cannot process data, but which is necessary for improvements to be made to the system. As a result, it is desirable for the downtime during software updates to a system to be minimised, so as to reduce the amount of processing time lost to such updates.

The present invention addresses this by providing an update methodology for mainframe systems, such as systems 100, 200 or 300, in which during the update of an environment library, a temporary or ephemeral version of the environment library is generated and made active, while the previously active default version of the same environment library is updated. Once the update is complete, the default library is made active such that all tasks are completed using the updated default version of the environment library, thereby completing the system update. By providing an active ephemeral version of the environment library, the system may continue OTLP and/or batch scheme processing based upon the original default version of the library from which the ephemeral version of the environment library was created. This allows the system to continue processing as normal for the majority of the time during which the default version of the environment library is being updated. The system can therefore maintain a greater degree of uninterrupted processing time, thereby improving the availability and reliability of the system.

The invention may take the form of a computer-implemented method of reducing mainframe system downtime is provided. The mainframe system referred to may be any of the systems described herein, such as systems 100, 200 and 300, which may be referred to interchangeably. The method refers to the update of an environment library loaded on system 100 and used by the system in one or more batch or OLTP scheme processing tasks. The environment library may be any environment library discussed herein. For example, in certain embodiments, the environment library is a load library. In further embodiments, the environment library comprises compiled code and elements which support the execution of the compiled code. The environment library may comprise load modules. The compiled code may be compiled versions of an application code, and the environment library may also comprise DBMS plans/packages/sets of compiled query language statements, reference data associated with the compiled code or any other suitable software element.

The "default" version of the environment library, as referred to herein, is the version of the environment library which is set to active on the system during normal use, i.e. prior to the update commencing. The default environment library is used in one or more batch and/or OLTP scheme processes performed by the system prior to the method of reducing mainframe system downtime described herein.

The whole or part of the method of reducing mainframe system downtime may be controlled using a high-level script. The high-level script may be written in REXX or alternatively in any other suitable scripting language. The script may be precompiled. The high-level script may use embedded TSO/ISPF commands to interact with an operating system, for example z/OS. The high-level script may be configured to set a library, such as the environment library, to offline or to active by renaming the library. Specifically, as all software relying on the environment library will call the environment library using one name, by changing whether an environment library has this name, the high-level script can determine whether software executed by system 100 points to the environment library for processing an application.

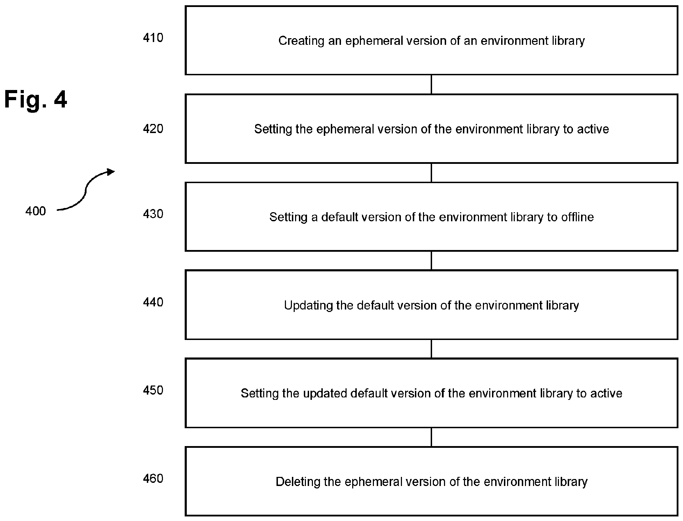

Referring to Figure 4, the method of reducing mainframe system downtime begins at step 410. At this step, an ephemeral version of the environment library is created. In general, creation of the ephemeral version of the environment library involves copying the data from the default version of the environment library to a new memory location, with new data identifiers to allow system 100 to discriminate between the default and ephemeral version of the environment library. The ephemeral version of the environment library may be an image copy of the default library, where, optionally, the only differences between the ephemeral and default libraries are their respective names and physical memory locations. An environment library name may be considered a data identifier. Generally, all environment libraries will be saved to an I/O storage device, such as an I/O storage device with DASD storage elements. In most cases, an image copy of the default version of the environment library may be created once the mainframe system is offline, i.e. once applications running in OLTP or batch processing schemes (which rely on the environment library to function) have been stopped. However, in some cases it may be possible to generate an image copy of the default version of the environment library at the start of the method. For example, the ephemeral version of the environment library could be the most recent stable backup copy of the default version of the environment library, wherein backup copies of the default version of the environment library may be made at periodic intervals during normal use of the system prior to the start of method 400. Backup copies of the default version of the environment library may be generated to provide a copy of the default version of the environment library for disaster recovery. For example, backup copies of the default version of the environment library may be used to continue normal use of the system 100 if the default version of the environment library becomes corrupted or otherwise inoperable. In other embodiments, the ephemeral version of the environment library may be copied from a backup copy of the default version of the environment library.

At step 410, once created, the ephemeral version of the environment library may be stored on any storage medium connected to the system. For example, the ephemeral version of the environment library may be stored at least in part on the main memory of the system, such as main memory 120 of system 100, or an I/O storage device connected to the system, such as I/O storage device 240 connected to system 200. If the ephemeral version of the environment library is stored at least in part on an I/O storage device, it is preferable that the I/O storage device 240 comprises DASD storage elements 242a-e, however in some cases the I/O storage device may comprise tapes configured to store the ephemeral version of the environment library. Non-transient memory which provides for slower data transfer may be used if the ephemeral version of the environment library is generated in advance of the remaining steps (i.e., steps 420 to 460) or if the ephemeral version of the environment library is a backup version of the default version of the environment library. For example, if the ephemeral version of the environment library is generated days and/or weeks in advance of the remaining steps, the ephemeral version of the environment library may be stored on an I/O storage device. Generally, following step 410, when or shortly before the ephemeral version of the environment library is set to active, at least part of the ephemeral version of the environment library will be stored on the main memory of the system to allow the processors, such as processors 110a-f, to rapidly access supporting data and execute compiled code stored within the ephemeral version of the environment library.

The data stored in the ephemeral version of the environment library may be identical to the default version of the environment library except for one or more data identifiers. The data identifiers in the ephemeral version of the environment library which differ from the default version of the environment library may include a name, a memory location where the ephemeral version of the environment library is stored and/or one or more identifying data tags. Preferably, at least the name of the ephemeral version of the environment library differs from the default version of the environment library.

In some embodiments, the default version and ephemeral version of the environment library may comprise one or more precompiled sets of commands. The one or more precompiled set of commands may comprise load modules, DB2 packages and IMS blocks. The one or more precompiled set of commands may further comprise one or more of: refence data updates, IMS database structure, DB2 plans, DB2 structure, DB2 timestamps, and/or IMS control build.

In some embodiments, the high-level script may generate the ephemeral version of the environment library using TSO/ISPF commands. The TSO/ISPF commands invoke one or more skeleton control instruction sets, populate these skeleton control instruction sets with substitution data and submit the populated skeleton control instruction sets for batch processing. The populated skeleton control instructions may be provided in a JCL format. The substitution data may comprise user input data. The script may request the user input data from a control user before performing this procedure. For example, user input may include user confirmation, user credentials, a date and/or system identifiers. The high-level script may comprise error handling code to allow for ending the procedure or reattempts at user input if any user input is incorrect or not provided in an accepted format. The populated skeleton control instruction sets may invoke executable programmes written in any coding language, such as Cobol or REXX, to perform one or more of the following tasks: creating an ephemeral version of the environment library by copying the default version of the environment library, setting the default version or ephemeral version of the environment library to active, such as by renaming either or both of the default version and ephemeral version of the environment library.

In most embodiments, the system may need to be taken down in order to create the ephemeral version of the environment library. However, in some embodiments, the system can remain online while the ephemeral version of the environment library is created.

At step 420, the ephemeral version of the environment library is set to active. As discussed in more detail herein, setting the ephemeral version of the environment library to active means that the ephemeral version of the environment library is used by the system in the processing of tasks according to OTLP and/or batch processing schemes (except during system downtime where the environment library should not be required by any OTLP and/or batch scheme processes). The same is true for setting any version of the environment library to active; whichever library is being set to active is used by the system in the processing of tasks according to OTLP and/or batch processing schemes.

In order to set the ephemeral version of the environment library to active, processing tasks undertaken by the system must be pointed to the ephemeral version of the environment library. For example, the transaction manager software, such as the IBM IMS TM software, must direct OLTP scheme transactions to be processed in accordance with the data stored within the ephemeral version of the environment library. Alternatively, control instruction sets must be reconfigured to execute applications in accordance with the data stored within the ephemeral version of the environment library. In some embodiments, the ephemeral version of the environment library is set to active by renaming the default and/or ephemeral version of the environment library. This renaming may be achieved by the high-level script, written in REXX. For example, only the version of the environment library with an active name will be accessed. This active name is the name which applications and other software call in order to access data stored within an environment library, therefore only a library with this name will be accessed. Specifically, for the ephemeral version of the environment library to be set to active it must be renamed to the relevant active name which the default version of the environment library would possess in normal operation of the mainframe system. Additionally or alternatively, the ephemeral version of the environment library is set to active by redirecting transactions and batch scheme jobs from the default version of the environment library to the ephemeral version of the environment library.

At step 430, the default version of the environment library is set to offline. As a counterpart to setting the ephemeral version of the environment library to active described herein, setting the default version of the environment library to offline requires that processing tasks are no longer reliant upon the data stored within the default version of the environment library. Setting the default version of the environment library to offline may be achieved by renaming the default version of the environment library from the active name to any name which is not the active name. This renaming may also be performed by the high-level script. Step 430 may be completed before, simultaneously with, or after step 420.For example, the renaming may be implicitly completed when renaming the ephemeral version of the environment library to the active name, such that the original name of the default version of the environment library will instead call the ephemeral version of the environment library. Setting any version of the environment library to offline, including the default version of the environment library, means that the version of the environment library set to offline will not be used by the system in the processing of tasks according to OTLP and/or batch processing schemes.

The physical memory location of the default version of the environment library may be changed while or after it is set to offline. This enables the default version of the environment library to be upgraded by a different system and may free some memory, such as main memory 120, for use by system 100 when processing tasks according to the ephemeral version of the environment library. However, generally, the default version of the environment library will be updated by the mainframe system.

Changing the version of the environment library which is active will require system downtime. Therefore, a first period of system downtime will be required while steps 420 and 430 complete irrespective of the order in which they occur. This may be due to processing schemes consistently requiring a copy of the environment library that the processing scheme was invoked according to, irrespective of whether the environment library is being replaced with an exact copy. In certain embodiments, the first period of system downtime begins prior to step 410 and ends following the completion of steps 420 and 430. Once the first period of system downtime ends, processing tasks can recommence, relying on the data stored within the ephemeral version of the environment library. Typically, this first period of system downtime lasts for approximately 2 hours.

At step 440, the default version of the environment library is updated. During this update, data stored in the default version of the environment library may be replaced, amended, removed from and/or added to the default version of the environment library. Such modification of the data stored in the default version of the environment library may add functionality to the default version of the environment library, improve the stability of the default version of the environment library, improve the compatibility of the default version of the environment library and/or otherwise change or improve the functioning of the default version of the environment library. The data stored in the default version of the environment library may include load modules, compiled code, DBMS plans, DBMS packages/sets of compiled SQL statements), reference data and/or any supporting software elements/artifacts which may be comprised within the default version of the environment library. Typically, the update allows control users to enable or introduce new applications and features, amend and adjust existing features, and/or decommission code. The updating will be processed by system 100 or any other connected system. Typically, the updating will be processed by the system, such as system 100, simultaneously to processing tasks in accordance with the data stored within the ephemeral version of the environment library. However, the updating may be completed in whole or in part by any secondary system or certain I/O devices connected to the system, such HMC 250 connected to system 200.

The updating is complete once an updated default version of the environment library is produced. The totality of the changes to be made when updating the default version of the environment library are typically pre-planned prior to the start of method 400. Therefore, the updated default version of the environment library can be considered produced once the pre-planned changes have been completed. In some embodiments, the updated default version of the environment library is checked for errors. If errors are found, these are corrected prior to the initiation of any subsequent steps in the method. If the first set of compiled query language statements no longer points towards or enables the updated default version of the environment library to access to data stored in one or more databases, a second set of compiled query language statements may be created and included in the updated default version of the environment library. The second set of compiled query language statements can be used to access the data stored in one or more databases using DBMS software. The first and second sets of compiled query language statements may enable access of the same one or more databases. Following the creation of the second set of compiled query language statements, the first and second sets of compiled query language statements may coexist on the system. During step 440, only the first set of compiled query language statements is used for processing tasks as the ephemeral version of the environment library is set to active. The coexistence of two sets of compiled query language statements directed to accessing environment libraries with equivalent purpose must be enabled by the DBMS software used by the system. For instance, this may be implemented with version 12 or newer of IBM Db2 DBMS software which enables the coexistence of two sets of compiled query language statements directed to accessing environment libraries with equivalent purpose.

While the default version of the environment library is updating, the ephemeral version of the environment library is set to active, allowing the system to continue processing tasks according to OLTP and batch schemes. For example, overnight batch processes may be completed using the data stored within the ephemeral version of the environment library. Additionally or alternatively, transactions sent by end users may be completed using the data stored within the ephemeral version of the environment library. As the ephemeral version of the environment library is copied from the default version of the environment library prior to any updating steps, processing tasks complete as though the default version of the environment library were still set to active.

Updating the environment library may include one or more of batch set up, re-baselining libraries, applying IBM IMS blocks, applying DB2 structural changes, applying DB2 plan, packages and timestamps, and/or applying IBM IMS database structural changes and control build. Generally, these tasks can be categorised as: updating transaction manager software elements and related database structures (and supporting elements), such as the IBM IMS software elements; updating DBMS software elements and related database structures, such as supporting precompiled sets of commands including IBM DB2 packages, plans and other supporting elements; updating libraries; and adding, removing or adjusting control instruction sets, whether skeleton or complete, for batch processing schemes. In many cases, DBMS and transaction manager software will not be updated during the method.

At step 450, the updated default version of the environment library is set to active. Step 450 is the same as step 420 described herein but sets the updated default version of the environment library to active instead of the ephemeral version of the environment library as in step 420. As with step 420, system downtime is required to set the updated default version of the environment library to active. The length of this second period of system downtime may be similar to the first period of system downtime, such as 2 hours. If a high-level script is used to implement the method, user input from a control user confirming that the updated default version of the environment library should be set to active may be required.

If a first precompiled set of commands and a second precompiled set of commands exist, as described herein, previous renaming of the ephemeral and (updated) default versions of the environment should be reverted such that the updated default version of the environment library is allocated the relevant active name. In essence, the transactions and batch processes should be redirected to point to the updated default version of the environment library. In most cases, this may require that the ephemeral version of the environment library is simultaneously set to offline, the ephemeral version of the environment library is allocated any appropriate name other than the active name taken by the updated default version of the environment library. However, in other cases the ephemeral version of the environment library may remain active for certain processes or regions of a logical partition.

Once the updated default version of the environment library is set to active, the system downtime may end. During this second period of system downtime, all update changes should be applied. Any updates beyond those made to the default version of the environment library may be the limiting factor in determining when system downtime can end. In addition, during either of the periods of system downtime, copies of databases may be made.

Finally, at step 460, the ephemeral version of the environment library may be deleted. In general, deletion refers to the erasure of data from a computer storage medium of any kind. In some cases, rather than explicit deletion, the ephemeral version of the environment library may be removed from the main memory to a tape or DASD memory medium in an I/O storage device.

Prior to the deletion or removal of the ephemeral version of the environment library, the updated default version of the environment library may be tested for stability. Generally, at any time after step 440 has been completed, a test for stability may comprise various checks to confirm that the update method 400 has been executed correctly. In some embodiments, a batch process may be run on the system using the updated default version of the environment library to test for stability if failure or instability is recorded by the system, the ephemeral version of the environment library will not be removed or deleted, and step 450 will be reverted such that the ephemeral version of the environment library is set to active. In further embodiments, the stability testing may last for several days following the first batch process run using the updated default version of the environment library and may also include OLTP processing. During this stability testing the ephemeral version of the environment library will not be removed or deleted from the system so that step 450 can be reverted if the updated default version of the environment library is shown to be unstable.

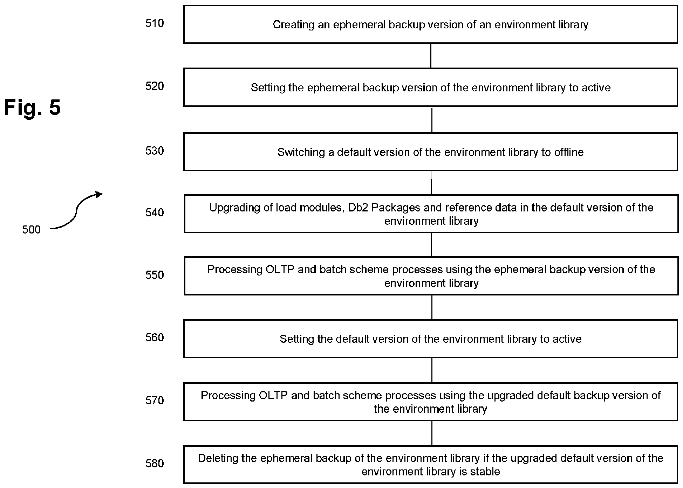

A more detailed computer-implemented method for reducing mainframe system downtime is provided with reference to Figure 5. The method shown in Figure 5 is based on the method shown in Figure 4, and has several corresponding steps in addition to several additional steps.

The method starts at step 510, where an ephemeral version of an environment library is created. The ephemeral version of the environment library may be a copy of a default version of the environment library. The ephemeral version of the environment library may be one of a plurality of regularly copied backups of a default version of the environment library, where the most recent backup may otherwise be used for disaster recovery.

At step 520, the ephemeral version of the environment library is set to active. The ephemeral version of the environment library is set to active in the same manner as in step 420 of method 400. In order for the ephemeral version of the environment library to be set to active, the first Db2 package(s) attached to the default version of the environment library prior to step 510 is attached to the ephemeral version of the environment library. The ephemeral version of the environment library and default versions of the environment library are then renamed, such that the ephemeral version of the environment library adopts the active name.

Occurring simultaneously with step 520, at step 530 the default version of the environment library is set to offline by renaming the default version of the environment library to any name which is not the active name. As only one active name exists and this active name points to and/or accesses the data stored in the ephemeral version of the environment library, the default version of the environment library may implicitly be set to offline by the step 520. However, in other embodiments, further renaming or registry amendment may be required to set the default version of the environment to offline.

During steps 520 and 530 there exists a first period of system downtime when normal processing tasks of the system are halted. This first period of system downtime may last for approximately 2 hours. During the first period of system downtime copies of databases stored on the system may be created. Step 510 may also occur during this first period of system downtime, particularly if the ephemeral version of the environment library is created by copying the default version of the environment library immediately before step 520 commences. The first period of system downtime must begin before the ephemeral version of an environment library is set to active and may end after the default version of the environment library is switched to offline.

Once the default version of the environment library is switched to offline the data stored within the default version of the environment library may be updated according to step 540. In some embodiments, one or more of the following environment library elements may be added, removed or amended: compiled and/or executable code, such as load modules, Db2 packages, reference data, Db2 plans, IMS blocks, IMS database structure, DB2 structure, DB2 timestamps, IMS control build and/or other software elements which may be stored in an environment library. The updates may be applied as a background batch scheme processing task scheduled to run in the background to (and simultaneously with) regular processing tasks. Once complete, an updated default version of the environment library will have been produced. A second Db2 package (or DB2 packages) corresponding to the updated default version of the environment library, is generated at step 540 and is attached to the updated default version of the environment library. Once the second Db2 package is created, two Db2 packages, enabling access of the potentially the same databases by the same applications, coexist in the storage of the system. This coexistence is permitted and facilitated by the version 12 (or newer) Db2 DBMS software running on the system.

Occurring simultaneously with step 540, at step 550 OLTP and batch scheme processes are processed by the system using the ephemeral version of the environment library. In some embodiments, the first task started in step 550 will be a batch scheme process, where the process will typically be one which needs to be completed on a regular interval such as an end of day batch process. The processing according to step 550 may end once the updated default version of the environment library has been produced by step 540 and is ready to be set to active.

At step 560, the updated default version of the environment library is set to active. Step 560 therefore reverts step 530 and applies the updated default version of the environment library to the system. This is achieved at least by renaming the updated default version of the environment library to the active name, and changing the name of the ephemeral version of the environment library to any name which is not the active name. In a similar manner to step 530, setting the updated default version of the environment library to active may implicitly set the ephemeral version of an environment library to offline.

Starting before step 560, a second period of system downtime will begin to allow for the updates to be applied at least by setting the updated default version of the environment library to active. The second period of system downtime may last for about 2 hours. The second period of system downtime ends after the updated default version of the environment library is set to active. During the second period of system downtime copies of databases stored on or accessed by the system may be created.

At step 570, OLTP and batch scheme processes are processed by the system using the updated default version of the environment library. In some embodiments one or more batch scheme processes, such as a batch process regularly processed at the start of a day, and OLTP processes are allowed to recommence using the data stored in the updated default version of the environment library once the second period of system downtime ends. In some embodiments, step 570 may continue in perpetuity after the updated default version of the environment library is set to active. In other embodiments, step 570 initially comprises a stability test. Generally, the stability test comprises checks to assess that the method 500 has proceeded correctly. The stability test may involve processing OLTP and batch scheme processes. If the updated default version of the environment library is not stable, either a backup copy of the default version of the environment library will be set to active, or step 560 will be reversed and the ephemeral version of an environment library will be set to active. Step 560 may be repeated following adjustment of the updated default version of the environment library, however in other embodiments the updated default version of the environment library may be deleted and/or removed from the system. If the updated default version of the environment library is found to be stable the method may continue to step 580.

At step 580, the ephemeral of the environment library is deleted if the upgraded default version of the environment library is stable. In some embodiments, the ephemeral of the environment library is not deleted, it is instead removed from the system. Removal from the system may involve moving the physical memory location of the ephemeral of the environment library to an external I/O storage device or other memory location which is not a component part of the system.

### General

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the drawings illustrate the architecture, functionality, and operation of possible implementations of methods according to various embodiments of the present invention. In this regard, each block in the flow diagram may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be performed substantially concurrently, or the blocks may sometimes be performed in the reverse order, depending upon the functionality involved. It will also be noted that each block of the flow diagrams, and combinations of blocks in the flow diagrams, can be implemented by special purpose hardware-based systems that perform the specified functions or acts, or combinations of special purpose hardware and computer instructions.

The invention is defined by the appended claims.

## Claims

1. A computer-implemented method for handling mainframe system (100) downtime, the mainframe system comprising an environment library that supports the execution of one or more applications on the mainframe system, the environment library having a default version, the method comprising:
beginning a first mainframe system downtime period;
creating (410) an ephemeral version of the environment library by copying the default version of the environment library, setting (420) the ephemeral version of the environment library to active, and setting (430) the default version of the environment library to offline;
ending the first mainframe system downtime period, and updating (440) the default version of the environment library;
once the update has completed, beginning a second mainframe system downtime period;
setting (450) the updated default version of the environment library to active; and
ending the second mainframe system downtime period, and deleting (460) the ephemeral version of the environment library.

2. The method of claim 1, wherein the default version of the environment library comprises a first precompiled set of commands that is configured to support the execution of one or more applications prior to the default version of the environment library being updated, and wherein, the ephemeral version of the environment library comprises the first precompiled set of commands that is configured to support the execution of one or more applications.

3. The method of claim 2, wherein updating the default version of the environment library comprises generating a second precompiled set of commands, wherein the updated default version of the environment library comprises the second precompiled set of commands that is configured to support the execution of one or more applications.

4. The method of claim 3, wherein setting the updated default version of the environment library to active comprises reconfiguring the mainframe system to use the second precompiled set of commands instead of the first precompiled set of commands.

5. The method of any of claims 2 to 4, wherein supporting the execution of one or more applications comprises accessing data stored in one or more databases.

6. The method of any of claims 2 to 5, wherein the first precompiled set of commands comprises load modules, DB2 packages and IMS blocks.

7. The method of claim 6, wherein the first precompiled set of commands further comprises one or more of: reference data updates, IMS database structure, DB2 plans, DB2 structure, DB2 timestamps, and/or IMS control build.

8. The method of any preceding claim, wherein the default and ephemeral versions of the environment library are switched between being set to active or offline by a REXX script.

9. The method of claim 8, further comprising:
renaming, using the REXX script, the versions of the environment library.

10. The method of any of claims 8 or 9, wherein the REXX script points batch and online transaction processes to the version of the environment library which is being set to active.

11. The method of any preceding claim, further comprising:
making a database copy each time the version of the environment library which is set to active is changed.

12. The method of any preceding claim, wherein updating the default version of the environment library comprises adding, deleting and/or upgrading one or more of: one or more load modules of the default version of the environment library, one or more Db2 packages of the default version of the environment library, and/or reference data included in the default version of the environment library.

13. The method of any preceding claim, wherein updating the default version of the environment library comprises one or more of: batch set up, re-baselining libraries, applying IMS blocks, applying Db2 structural changes, applying Db2 plans, packages and timestamps, and/or applying IMS database structural changes and control build.

14. A computer program product comprising instructions which, when executed by a mainframe system, cause the mainframe system to perform the steps of any preceding claim.

15. A computer readable medium comprising instructions which, when executed by a mainframe system, cause the mainframe system to perform the method of any of claims 1 to 13.

16. A mainframe system, the mainframe system comprising at least one processor, wherein the at least one processor is configured to perform the method of any of claims 1 to 13.

## Patentansprüche

1. Computerimplementiertes Verfahren zum Handhaben von Ausfallzeiten des Mainframe-Systems (100), wobei das Mainframe-System eine Umgebungsbibliothek umfasst, die die Ausführung einer oder mehrerer Anwendungen auf dem Mainframe-System unterstützt, wobei die Umgebungsbibliothek eine Standardversion aufweist, wobei das Verfahren Folgendes umfasst:
Beginnen einer ersten Ausfallzeitperiode des Mainframe-Systems;
Erstellen (410) einer flüchtigen Version der Umgebungsbibliothek durch Kopieren der Standardversion der Umgebungsbibliothek, Einstellen (420) der flüchtigen Version der Umgebungsbibliothek auf "aktiv" und
Einstellen (430) der Standardversion der Umgebungsbibliothek auf "offline";
Beenden der ersten Ausfallzeitperiode des Mainframe-Systems und Aktualisieren (440) der Standardversion der Umgebungsbibliothek;
sobald die Aktualisierung abgeschlossen ist, Beginnen einer zweiten Ausfallzeitperiode des Mainframe-Systems;
Einstellen (450) der aktualisierten Standardversion der Umgebungsbibliothek auf "aktiv"; und
Beenden der zweiten Ausfallzeitperiode des Mainframe-Systems und Löschen (460) der flüchtigen Version der Umgebungsbibliothek.

2. Verfahren nach Anspruch 1, wobei die Standardversion der Umgebungsbibliothek einen ersten vorkompilierten Satz von Befehlen umfasst, der dazu ausgelegt ist, die Ausführung einer oder mehrerer Anwendungen zu unterstützen, bevor die Standardversion der Umgebungsbibliothek aktualisiert wird, und wobei die flüchtige Version der Umgebungsbibliothek den ersten vorkompilierten Befehlssatz umfasst, der dazu ausgelegt ist, die Ausführung einer oder mehrerer Anwendungen zu unterstützen.

3. Verfahren nach Anspruch 2, wobei das Aktualisieren der Standardversion der Umgebungsbibliothek das Erzeugen eines zweiten vorkompilierten Befehlssatzes umfasst, wobei die aktualisierte Standardversion der Umgebungsbibliothek den zweiten vorkompilierten Befehlssatz umfasst, der dazu ausgelegt ist, die Ausführung einer oder mehrerer Anwendungen zu unterstützen.

4. Verfahren nach Anspruch 3, wobei das Einstellen der aktualisierten Standardversion der Umgebungsbibliothek auf "aktiv" das Rekonfigurieren des Mainframe-Systems umfasst, um den zweiten vorkompilierten Befehlssatz anstelle des ersten vorkompilierten Befehlssatzes zu verwenden.

5. Verfahren nach einem der Ansprüche 2 bis 4, wobei das Unterstützen der Ausführung einer oder mehrerer Anwendungen das Zugreifen auf Daten umfasst, die in einer oder mehreren Datenbanken gespeichert sind.

6. Verfahren nach einem der Ansprüche 2 bis 5, wobei der erste vorkompilierte Befehlssatz Lademodule, DB2-Pakete und IMS-Blöcke umfasst.

7. Verfahren nach Anspruch 6, wobei der erste vorkompilierte Befehlssatz ferner eines oder mehrere von Folgendem umfasst: Referenzdatenaktualisierungen, IMS-Datenbankstrukturen, DB2-Pläne, eine DB2-Struktur, DB2-Zeitstempel, und/oder einen IMS-Steuerungsaufbau.

8. Verfahren nach einem der vorhergehenden Ansprüche, wobei die Standard- und die flüchtige Version der Umgebungsbibliothek zwischen der Einstellung "aktiv" oder "offline" durch ein REXX-Skript umgeschaltet werden.

9. Verfahren nach Anspruch 8, das ferner Folgendes umfasst:
Umbenennen der Versionen der Umgebungsbibliothek mit dem REXX-Skript.

10. Verfahren nach einem der Ansprüche 8 oder 9, wobei das REXX-Skript, Batch- und Online-Transaktionsprozesse auf die Version der Umgebungsbibliothek verweist, die auf "aktiv" eingestellt wird.

11. Verfahren nach einem der vorhergehenden Ansprüche, das ferner Folgendes umfasst:
Erstellen einer Datenbankkopie jedes Mal, wenn die Version der Umgebungsbibliothek, die auf "aktiv" eingestellt ist, geändert wird.

12. Verfahren nach einem der vorhergehenden Ansprüche, wobei das Aktualisieren der Standardversion der Umgebungsbibliothek das Hinzufügen, Löschen und/oder Aktualisieren von einem oder mehreren von Folgendem umfasst: einem oder mehreren Lademodulen der Standardversion der Umgebungsbibliothek, einem oder mehreren Db2-Paketen der Standardversion der Umgebungsbibliothek und/oder Referenzdaten, die in der Standardversion der Umgebungsbibliothek enthalten sind.

13. Verfahren nach einem der vorhergehenden Ansprüche, wobei das Aktualisieren der Standardversion der Umgebungsbibliothek eines oder mehrere von Folgendem umfasst: Batch-Setup, neues Festlegen der Baseline von Bibliotheken, Anwenden von IMS-Blöcken, Anwenden von Db2-Strukturänderungen, Anwenden von Db2-Plänen, Paketen und Zeitstempeln und/oder Anwenden von IMS-Datenbankstrukturänderungen und Steueraufbau.

14. Computerprogrammprodukt, das Anweisungen umfasst, die, wenn sie durch ein Mainframe-System ausgeführt werden, das Mainframe-System dazu veranlassen, die Schritte nach einem der vorhergehenden Ansprüche durchzuführen.

15. Computerlesbares Medium, das Anweisungen umfasst, die, wenn sie durch ein Mainframe-System ausgeführt werden, das Mainframe-System dazu veranlassen, das Verfahren nach einem der Ansprüche 1 bis 13 durchzuführen.

16. Mainframe-System, wobei das Mainframe-System mindestens einen Prozessor umfasst, wobei der mindestens eine Prozessor dazu ausgelegt ist, das Verfahren nach einem der Ansprüche 1 bis 13 durchzuführen.

## Revendications

1. Procédé mis en œuvre par ordinateur pour gérer les temps d'indisponibilité d'un système (100) de macroordinateur, le système de macroordinateur comprenant une bibliothèque d'environnement qui prend en charge l'exécution d'une ou de plusieurs applications sur le système de macroordinateur, la bibliothèque d'environnement ayant une version par défaut, le procédé comprenant :
le commencement d'une première période d'indisponibilité du système de macroordinateur ;
la création (410) d'une version éphémère de la bibliothèque d'environnement par copie de la version par défaut de la bibliothèque d'environnement, le placement (420) de la version éphémère de la bibliothèque d'environnement dans l'état actif, et le placement (430) de la version par défaut de la bibliothèque d'environnement dans l'état hors ligne ;
la cessation de la première période d'indisponibilité du système de macroordinateur, et la mise à jour (440) de la version par défaut de la bibliothèque d'environnement ;
une fois la mise à jour terminée, le commencement d'une seconde période d'indisponibilité du système de macroordinateur ;
le placement (450) de la version par défaut mise à jour de la bibliothèque d'environnement dans l'état actif ; et
la cessation de la seconde période d'indisponibilité du système de macroordinateur et la suppression (460) de la version éphémère de la bibliothèque d'environnement.

2. Procédé selon la revendication 1, la version par défaut de la bibliothèque d'environnement comprenant un premier ensemble précompilé de commandes qui est configuré pour prendre en charge l'exécution d'une ou de plusieurs applications avant que la version par défaut de la bibliothèque d'environnement ne soit mise à jour, et la version éphémère de la bibliothèque d'environnement comprenant le premier ensemble précompilé de commandes qui est configuré pour prendre en charge l'exécution d'une ou de plusieurs applications.

3. Procédé selon la revendication 2, la mise à jour de la version par défaut de la bibliothèque d'environnement comprenant la génération d'un second ensemble précompilé de commandes, la version par défaut mise à jour de la bibliothèque d'environnement comprenant le second ensemble précompilé de commandes qui est configuré pour prendre en charge l'exécution d'une ou de plusieurs applications.

4. Procédé selon la revendication 3, le placement de la version par défaut mise à jour de la bibliothèque d'environnement dans l'état actif comprenant la reconfiguration du système de macroordinateur pour utiliser le second ensemble précompilé de commandes au lieu du premier ensemble précompilé de commandes.

5. Procédé selon l'une quelconque des revendications 2 à 4, la prise en charge de l'exécution d'une ou de plusieurs applications comprenant l'accès à des données stockées dans une ou plusieurs bases de données.

6. Procédé selon l'une quelconque des revendications 2 à 5, le premier ensemble précompilé de commandes comprenant des modules de chargement, des paquets DB2 et des blocs IMS.

7. Procédé selon la revendication 6, le premier ensemble précompilé de commandes comprenant en outre un ou plusieurs des éléments suivants : mises à jour de données de référence, structure de base de données IMS, plans DB2, structure DB2, horodatages DB2, et/ou édition de contrôle IMS.

8. Procédé selon l'une quelconque des revendications précédentes, les versions par défaut et éphémère de la bibliothèque d'environnement étant commutées entre le placement dans l'état actif ou hors ligne par un script REXX.

9. Procédé selon la revendication 8, comprenant en outre :
le fait de renommer, à l'aide du script REXX, les versions de la bibliothèque d'environnement.

10. Procédé selon l'une quelconque des revendications 8 ou 9, le script REXX orientant les processus de transactions par lots et en ligne vers la version de la bibliothèque d'environnement qui est en cours de placement dans l'état actif.

11. Procédé selon l'une quelconque des revendications précédentes, comprenant en outre :
la création d'une copie de base de données chaque fois que la version de la bibliothèque d'environnement placée dans l'état actif est modifiée.

12. Procédé selon l'une quelconque des revendications précédentes, la mise à jour de la version par défaut de la bibliothèque d'environnement comprenant l'ajout, la suppression et/ou la mise à niveau d'un ou de plusieurs éléments parmi : un ou plusieurs modules de chargement de la version par défaut de la bibliothèque d'environnement, d'un ou de plusieurs paquets Db2 de la version par défaut de la bibliothèque d'environnement, et/ou des données de référence incluses dans la version par défaut de la bibliothèque d'environnement.

13. Procédé selon l'une quelconque des revendications précédentes, la mise à jour de la version par défaut de la bibliothèque d'environnement comprenant un ou plusieurs éléments parmi : établissement de lots, recalage de bibliothèques, application de blocs IMS, application de changements structurels Db2, application de plans, de paquets et d'horodatages Db2, et/ou application de changements structurels de base de données IMS et d'une édition de contrôle.

14. Produit de programme informatique comprenant des instructions qui, lorsqu'elles sont exécutées par un système de macroordinateur, amènent le système de macroordinateur à exécuter les étapes selon l'une quelconque des revendications précédentes.

15. Support lisible par ordinateur comprenant des instructions qui, lorsqu'elles sont exécutées par un système de macroordinateur, amènent le système de macroordinateur à réaliser le procédé selon l'une quelconque des revendications 1 à 13.

16. Système de macroordinateur, le système de macroordinateur comprenant au moins un processeur, le ou les processeurs étant configurés pour réaliser le procédé selon l'une quelconque des revendications 1 à 13.
